# EUROPÄISCHE PATENTSCHRIFT

(11) **EP 3 281 269 B1**
(45) Veröffentlichungstag und Bekanntmachung des Hinweises auf die Patenterteilung: **01.05.2019**
(21) Anmeldenummer: 16713852.8
(22) Anmeldetag: 30.03.2016
(51) Int. Cl.: H02J 3/38

(54) **EFFIZIENTE ENERGIEÜBERTRAGUNG VON OFFSHORE ERZEUGTER ELEKTRISCHER ENERGIE AUFS LAND**
EFFICIENT POWER TRANSMISSION TO LAND OF ELECTRICAL POWER GENERATED OFFSHORE
TRANSMISSION EFFICACE DE L'ÉNERGIE ÉLECTRIQUE PRODUITE EN MER VERS LA TERRE FERME

(30) Priorität: 09.04.2015 DE 102015206307
(43) Veröffentlichungstag der Anmeldung: 14.02.2018
(73) Patentinhaber: Siemens Aktiengesellschaft, 80333 München (DE)
(72) Erfinder: HAMMER, Thomas, 91126 Schwabach (DE); MENKE, Peter, 96237 Oberfüllbach (DE)
(86) Internationale Anmeldenummer: PCT/EP2016/056839
(87) Internationale Veröffentlichungsnummer: WO 2016/162240

(56) Entgegenhaltungen:
- WO-A1-2015/024583
- DE-U1-202012 012 848
- US-A1- 2011 141 773
- MEIER ET AL: "Benchmark of Annual Energy Production for Different Wind Farm Topologies", POWER ELECTRONICS SPECIALISTS CONFERENCE, 2005. PESC '05. IEEE 36TH, IEEE, PISCATAWAY, NJ, USA, 1. Januar 2005 (2005-01-01), Seiten 2073-2080, XP031000426, DOI: 10.1109/PESC.2005.1581918 ISBN: 978-0-7803-9033-1

## Beschreibung

Die Erfindung betrifft ein Verfahren zur Erzeugung und Übertragung elektrischer Energie von einem offshore angeordneten Windpark in ein landgestütztes Energieversorgungsnetz,
- wobei in dem Windpark mittels einer Mehrzahl von Windkraftanlagen jeweils aus Windkraft elektrische Energie erzeugt wird,
- wobei die erzeugte elektrische Energie innerhalb der jeweiligen Windkraftanlage mittels eines jeweiligen Umrichters auf eine Arbeitsfrequenz umgesetzt wird und mittels eines dem jeweiligen Umrichter nachgeordneten jeweiligen Transformators auf eine Quellenspannung transformiert wird,
- wobei die elektrische Energie, ausgehend von den Windkraftanlagen, einer den Windkraftanlagen gemeinsamen, offshore angeordneten Umsetzeinrichtung zugeführt wird, in der die elektrische Energie gleichgerichtet wird,
- wobei die elektrische Energie, ausgehend von der Umsetzeinrichtung, einer an Land oder in Landnähe angeordneten Einspeiseeinrichtung zugeführt wird, von der die elektrische Energie in das landgestützte Energieversorgungsnetz eingespeist wird,
- wobei die Arbeitsfrequenz mindestens 100 Hz beträgt.

Ein solches Verfahren ist aus der Veröffentlichung von Meier et al. "Benchmark of Annual Energy Production for Different Wind Farm Topologies" erschienen in Power Electronics Specialists Conference, 2005, PESC 2005, IEEE 36th, IEEE, Piscataway, NJ, USA, 1. Januar 2005, Seiten 2073-2080, ISBN: 978-0-7803-9033-1 bereits bekannt. Dort ist ein im Meer aufgestellter Windpark offenbart, der mehrere Windenergieanlagen umfasst. Die Windenergieanlagen verfügen über einen Generator, dem ein so genannter Cyclo-Umrichter nachgeschaltet ist, der aus antiparallel geschalteten Thyristoren besteht. Die Thyristoren werden mit einer Schaltfrequenz von 500 Hz beaufschlagt, wobei einphasige Mittelfrequenzimpulse erzeugt werden. Ein Mittelfrequenztransformator sorgt für die Transformation der eingehenden elektrischen Spannung auf die von einem ebenfalls meerseitig aufgestellten Umrichter geforderte Eingangsspannung. Der meerseitig aufgestellte Umrichter wandelt die eingehenden Wechselspannungen in eine Gleichspannung um. Dabei ist der meerseitig aufgestellte Umrichter an seiner Gleichspannungsseite mit einem an Land angeordneten Wechselrichter verbunden, der an seiner Wechselspannungsseite mit einem Energieversorgungsnetz verbunden ist, so dass die von den Windenergieanlagen erzeugte elektrische Leistung mit geringem Verlust in das Energieversorgungsnetz eingespeist werden kann.

In der WO 2015/024583 A1 ist ebenfalls eine meerseitig angeordnete Windenergieanlage offenbart. Jeder Windenergieanlage ist ein Frequenzumrichter zugeordnet, der einem Transformator vorgeschaltet ist. Dabei sind die Transformatoren der Windenergieanlagen jeweils mit einem zentralen Diodengleichrichter verbunden, der ebenfalls meerseitig aufgestellt ist. Der Diodengleichrichter ist gleichspannungsseitig mit einem Wechselrichter, der landseitig angeordnet und mit selbstgeführten Leistungshalbleiterschaltern ausgerüstet ist. Der landseitige Umrichter ist mit einem Energieversorgungsnetz verbunden.

Weitere hier relevante Entgegenhaltungen sind die DE 20 2012 012848 U1 sowie die US 2011/141773 A1.

Die Gewinnung elektrischer Energie aus Windenergie stellt insbesondere dann, wenn die entsprechende Windkraftanlage offshore angeordnet ist, eine vielversprechende sogenannte erneuerbare Energiequelle ("grüne Energie") dar. Insbesondere ist die Anzahl an Volllaststunden - d.h. an Stunden, in denen die Windkraftanlage ihre volle Nennleistung abgibt - auf See deutlich höher als an Land. Im Gegenzug ist dafür die Anbindung an das landgestützte Energieversorgungsnetz aufwändiger. Im Stand der Technik ist zur Anbindung von offshore angeordneten Windparks an ein landgestütztes Energieversorgungsnetz bekannt, die von den Windkraftanlagen erzeugte elektrische Energie zunächst innerhalb der jeweiligen Windkraftanlage mittels eines jeweiligen Umrichters auf eine (in der Regel mehrphasige) Wechselspannung von 50 Hz umzusetzen, die sodann mittels eines dem jeweiligen Umrichter nachgeordneten jeweiligen Transformators auf eine Quellenspannung von 33 kV - angedacht ist bereits auch eine Quellenspannung von 66 kV - transformiert wird. Sodann wird die elektrische Energie, ausgehend von den Windkraftanlagen, einer den Windkraftanlagen gemeinsamen, offshore angeordneten Transformatoreinrichtung zugeführt. In der Transformatoreinrichtung wird die Quellenspannung auf eine Zwischenspannung transformiert, wobei die Zwischenspannung größer als die Quellenspannung ist. Beispielsweise kann die Zwischenspannung 155 kV betragen. Mit der Zwischenspannung wird die elektrische Energie sodann einer Umsetzeinrichtung zugeführt, in der die elektrische Energie gleichgerichtet wird. Meist erfolgt vor dem Gleichrichten eine erneute Transformation auf eine Endspannung, wobei die Endspannung größer als die Zwischenspannung ist. Die Endspannung kann beispielsweise im Bereich von ca. 300 kV liegen. Schließlich wird die elektrische Energie, ausgehend von der Umsetzeinrichtung, einer an Land oder in Landnähe angeordneten Einspeiseeinrichtung zugeführt, von der die elektrische Energie in das landgestützte Energieversorgungsnetz eingespeist wird. In der Regel erfolgt hierbei eine erneute Umsetzung in eine Wechselspannung. Soweit erforderlich, erfolgt weiterhin eine Transformation, beispielsweise auf 380 kV.

Die Vorgehensweise des Standes der Technik ist aufwändig und führt zu hohen Kosten. Insbesondere die Transformatoreinrichtung und die Umsetzeinrichtung sind oftmals teuer. Die Kosten der beiden genannten Einrichtungen werden in erheblichem Umfang durch die Größe und das Gewicht der erforderlichen Transformatoren bestimmt. Die resultierenden hohen Gesamtkosten gefährden die Wettbewerbsfähigkeit von offshore angeordneten Windparks als Ganzes.

Die Aufgabe der vorliegenden Erfindung besteht darin, ein Verfahren der eingangs genannten Art zu schaffen, mit dem auf kostengünstige Weise die offshore erzeugte elektrische Energie an Land übertragen werden kann.

Die Erfindung löst diese Aufgabe dadurch, dass dass die Quellenspannung mindestens 80 kV beträgt.

Erfindungsgemäß wird ein Verfahren bereitgestellt, bei dem die Arbeitsfrequenz mindestens 100 Hz beträgt. Insbesondere kann die Arbeitsfrequenz beispielsweise mindestens 150 Hz, mindestens 200 Hz oder mindestens 300 Hz betragen. Maximal liegt die Arbeitsfrequenz in der Regel unterhalb 1 kHz. In Einzelfällen sind jedoch auch geringfügig größere Frequenzen von bis zu 2 kHz oder bis zu 3 kHz denkbar.

Aufgrund dieser hohen Frequenzen können kleinere und leichtere Transformatoren verwendet werden. Hierbei kann nicht nur die Baugröße der auf der Transformatoreinrichtung und auf der Umsetzeinrichtung angeordneten Transformatoren verringert werden, sondern auch die Baugröße der auf der jeweiligen Windkraftanlage angeordneten Transformatoren. Insbesondere ist die Baugröße der Transformatoren im Wesentlichen reziprok zur Arbeitsfrequenz. Wenn beispielsweise die Arbeitsfrequenz 200 Hz beträgt, beträgt die Baugröße der Transformatoren im Vergleich zu auf eine Standardfrequenz von 50 Hz ausgelegten Transformatoren nur rund 1/4. Ähnliche Verhältnisse ergeben sich bei anderen Arbeitsfrequenzen.

Die Quellenspannung - das heißt diejenige Spannung, mit der die Windkraftanlagen die elektrische Energie abgeben - sollte möglichst groß gewählt werden. Erfindungsgemäß beträgt die Quellenspannung mindestens 80 kV. Beispielsweise kann die Quellenspannung mindestens 100 kV betragen. Es sind auch noch größere Spannungen von beispielsweise mindestens 130 kV oder mindestens 150 kV möglich. Insbesondere kann die Quellenspannung 155 kV betragen.

In einer weiteren bevorzugten Ausgestaltung wird die elektrische Energie der Umsetzeinrichtung von den Windkraftanlagen direkt - ohne zwischengeschaltete Transformatoreinrichtung - mit der Quellenspannung zugeführt. In diesem Fall kann die im Stand der Technik erforderliche Transformatoreinrichtung komplett eingespart werden. Diese Vorgehensweise ist insbesondere in Kombination aufgrund der hohen Quellenspannung (80 kV und mehr) möglich und von Vorteil.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Energieübertragungssystem,
- FIG 2: einen elektrischen Teil einer Windkraftanlage und
- FIG 3: ein weiteres Energieübertragungssystem.

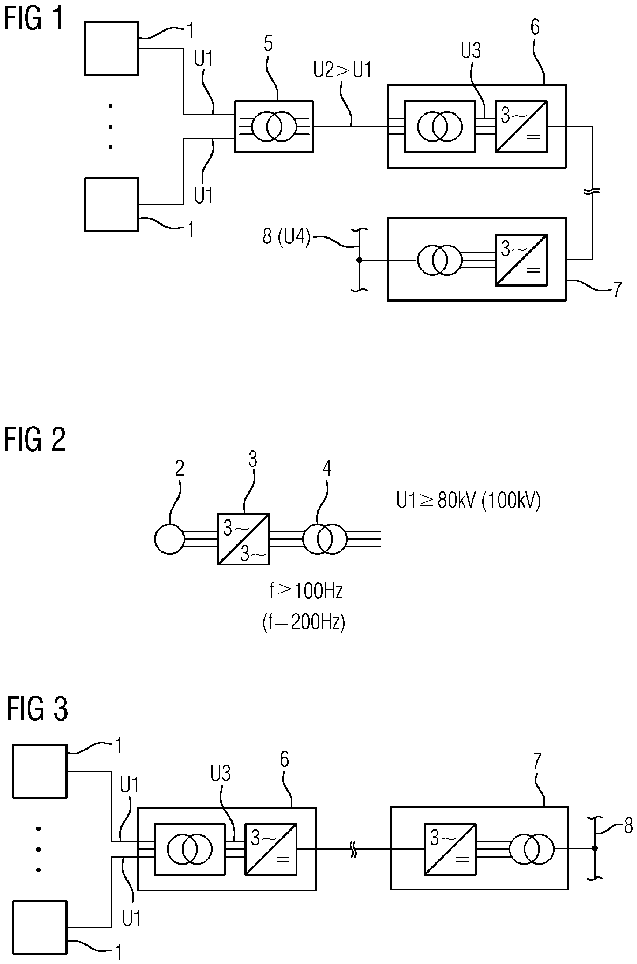

Gemäß FIG 1 weist ein Energieübertragungssystem eine Mehrzahl von Windkraftanlagen 1 auf. Die Anzahl an Windkraftanlagen 1 kann nach Bedarf bestimmt sein. Oftmals liegt sie im zwei- oder sogar dreistelligen Bereich. Die Windkraftanlagen 1 bilden in ihrer Gesamtheit einen Windpark. Der Windpark ist offshore angeordnet.

In dem Windpark wird mittels der Windkraftanlagen 1 in an sich bekannter Art und Weise jeweils aus Windkraft elektrische Energie erzeugt. Die erzeugte elektrische Energie wird gemäß FIG 2 innerhalb der jeweiligen Windkraftanlage 1 zunächst mittels einer elektrischen Maschine 2 erzeugt. Die elektrische Maschine 2 wird von einem nicht dargestellten Windrad angetrieben. Die erzeugte elektrische Energie wird innerhalb der jeweiligen Windkraftanlage 1 mittels eines jeweiligen Umrichters 3 auf eine Arbeitsfrequenz f umgesetzt. Die Arbeitsfrequenz f beträgt gemäß FIG 2 mindestens 100 Hz. Oftmals liegt sie sogar oberhalb von 100 Hz, beispielsweise entsprechend der Darstellung in Figur 2 bei 200 Hz. Die Arbeitsfrequenz f kann jedoch auch einen größeren oder kleineren Wert aufweisen, beispielsweise 150 Hz, 250 Hz, 300 Hz usw. In der Regel liegt die Arbeitsfrequenz f unterhalb von 1 kHz. Der Umrichter 3 ist in der Regel als Zwischenkreisumrichter ausgebildet. Er kann jedoch auch andersartig ausgebildet sein, beispielsweise als Direktumrichter.

Die elektrische Energie wird innerhalb der jeweiligen Windkraftanlage 1 mittels eines dem jeweiligen Umrichter 3 nachgeordneten jeweiligen Transformators 4 auf eine Quellenspannung U1 transformiert. Die Quellenspannung U1 ist diejenige Spannung, mit der von der jeweiligen Windkraftanlage 1 die elektrische Energie abgegeben wird. Die Quellenspannung U1 ist eine - in der Regel mehrphasige - Wechselspannung. Sie kann beispielsweise bei 33 kV oder bei 66 kV liegen. Vorzugsweise beträgt die Quellenspannung U1 mindestens 80 kV. Oftmals liegt sie sogar bei mindestens 100 kV.

Gemäß FIG 1 wird die elektrische Energie, ausgehend von den Windkraftanlagen 1, zunächst einer Transformatoreinrichtung 5 zugeführt. Die Transformatoreinrichtung 5 ist ebenfalls offshore angeordnet und Bestandteil des Windparks. Sie ist einheitlich für mehrere der Windkraftanlagen 1 vorhanden. Oftmals ist sie sogar nur ein einziges Mal vorhanden. In der Transformatoreinrichtung 5 wird die elektrische Energie, welche der Transformatoreinrichtung 5 von den Windkraftanlagen 1 zugeführt wird, von der Quellenspannung U1 auf eine Zwischenspannung U2 transformiert. Die Zwischenspannung U2 ist größer als die Quellenspannung U1. Beispielsweise kann die Zwischenspannung U2 im Bereich von ca. 150 kV oder geringfügig darüber liegen.

Mit der Zwischenspannung U2 wird die elektrische Energie sodann einer Umsetzeinrichtung 6 zugeführt. Die Umsetzeinrichtung 6 ist ebenfalls offshore angeordnet und Bestandteil des Windparks. In der Umsetzeinrichtung 6 wird die der Umsetzeinrichtung 6 zugeführte elektrische Energie zumindest gleichgerichtet wird. Meist erfolgt vor dem Gleichrichten eine erneute Transformation auf eine Endspannung U3, wobei die Endspannung U3 größer als die Zwischenspannung U2 ist. Die Endspannung U3 - d.h. die Wechselspannung vor dem Gleichrichten als solches - kann insbesondere im Bereich von ca. 300 kV liegen, beispielsweise bei 310 kV bis 315 kV. Schließlich wird die elektrische Energie, ausgehend von der Umsetzeinrichtung 6, - nunmehr als Gleichspannung - einer Einspeiseeinrichtung 7 zugeführt. Die Einspeiseeinrichtung 7 ist an Land oder in Landnähe angeordnet. Von der Einspeiseeinrichtung 7 wird die elektrische Energie in ein Energieversorgungsnetz 8 eingespeist. Das Energieversorgungsnetz 8 ist landgestützt. In der Regel erfolgt im Rahmen der Einspeisung in das Energieversorgungsnetz 8 innerhalb der Einspeiseeinrichtung 7 eine erneute Umsetzung in eine Wechselspannung. Diese Wechselspannung weist in der Regel eine Frequenz von 50 Hz oder von 60 Hz auf. Soweit erforderlich, erfolgt weiterhin eine Transformation auf die Netzspannung U4 des Energieversorgungsnetzes 8, beispielsweise entsprechend der Darstellung in FIG 1 auf 380 kV.

Das Energieübertragungssystem von FIG 3 korrespondiert über weite Strecken mit dem Energieübertragungssystem von FIG 1. Nachfolgend wird daher nur auf die Unterschiede näher eingegangen.

Gemäß FIG 3 ist keine Transformatoreinrichtung vorhanden. Vielmehr wird die elektrische Energie der Umsetzeinrichtung 6 von den Windkraftanlagen 1 direkt mit der Quellenspannung U1 zugeführt. Diese Ausgestaltung ist insbesondere dadurch möglich, dass die Quellenspannung U1 erheblich größer als die im Stand der Technik üblichen 33 kV ist. Insbesondere bietet sich diese Vorgehensweise an, wenn die Quellenspannung U1 mindestens 130 kV beträgt, insbesondere mindestens 150 kV. Beispielsweise kann die Quellenspannung U1 entsprechend der Darstellung in FIG 3 bei 155 kV liegen.

Bei der Ausgestaltung gemäß FIG 3 ist der strukturelle Aufbau des elektrischen Teils der Windkraftanlagen 1 gegenüber dem in Verbindung mit FIG 2 erläuterten Aufbau unverändert. Lediglich die Auslegung der Transformatoren 4 muss gegebenenfalls an die noch höhere Quellenspannung U1 angepasst werden.

Zusammengefasst betrifft die vorliegende Erfindung somit folgenden Sachverhalt:
In einem offshore angeordneten Windpark wird mittels einer Mehrzahl von Windkraftanlagen 1 jeweils aus Windkraft elektrische Energie erzeugt. Die erzeugte elektrische Energie wird innerhalb der jeweiligen Windkraftanlage 1 mittels eines jeweiligen Umrichters 3 auf eine Arbeitsfrequenz f von mindestens 100 Hz umgesetzt und mittels eines dem jeweiligen Umrichter 3 nachgeordneten jeweiligen Transformators 4 auf eine Quellenspannung U1 transformiert. Die elektrische Energie wird, ausgehend von den Windkraftanlagen 1, einer den Windkraftanlagen 1 gemeinsamen, offshore angeordneten Umsetzeinrichtung 6 zugeführt, in der die elektrische Energie gleichgerichtet wird. Die elektrische Energie wird, ausgehend von der Umsetzeinrichtung 6, einer an Land oder in Landnähe angeordneten Einspeiseeinrichtung 7 zugeführt, von der die elektrische Energie in ein landgestütztes Energieversorgungsnetz 8 eingespeist wird.

Die vorliegende Erfindung weist viele Vorteile auf. Insbesondere können zumindest die Baugrößen und hiermit verbunden die Gewichte und die Kosten der Transformatoren 4, der Transformatoreinrichtung 5 und eines Transformators auf der Umsetzeinrichtung 6 deutlich reduziert werden. Weiterhin kann unter Umständen sogar die Transformatoreinrichtung 5 vollständig entfallen. Aufgrund der Gewichtsreduzierung der Transformatoren 4 ergibt sich weiterhin eine erhöhte mechanische Stabilität der Windkraftanlagen 1.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Erzeugung und Übertragung elektrischer Energie von einem offshore angeordneten Windpark in ein landgestütztes Energieversorgungsnetz (8),
- wobei in dem Windpark mittels einer Mehrzahl von Windkraftanlagen (1) jeweils aus Windkraft elektrische Energie erzeugt wird,
- wobei die erzeugte elektrische Energie innerhalb der jeweiligen Windkraftanlage (1) mittels eines jeweiligen Umrichters (3) auf eine Arbeitsfrequenz (f) umgesetzt wird und mittels eines dem jeweiligen Umrichter (3) nachgeordneten jeweiligen Transformators (4) auf eine Quellenspannung (U1) transformiert wird,
- wobei die elektrische Energie, ausgehend von den Windkraftanlagen (1), einer den Windkraftanlagen (1) gemeinsamen, offshore angeordneten Umsetzeinrichtung (6) zugeführt wird, in der die elektrische Energie gleichgerichtet wird,
- wobei die elektrische Energie, ausgehend von der Umsetzeinrichtung (6), einer an Land oder in Landnähe angeordneten Einspeiseeinrichtung (7) zugeführt wird, von der die elektrische Energie in das landgestützte Energieversorgungsnetz (8) eingespeist wird,
- wobei die Arbeitsfrequenz (f) mindestens 100 Hz beträgt, **dadurch gekennzeichnet,**
**dass** die Quellenspannung (U1) mindestens 80 kV beträgt.

2. Verfahren nach Anspruch 1,
**dadurch gekennzeichnet,**
**dass** die elektrische Energie der Umsetzeinrichtung (6) von den Windkraftanlagen (1) direkt - ohne zwischengeschaltete Transformatoreinrichtung - mit der Quellenspannung (U1) zugeführt wird.

## Claims

1. Method for generating and transmitting electrical energy from an offshore wind farm to a land-based energy supply network (8),
- wherein, in the wind farm, electrical energy is generated in each case from wind power by means of a plurality of wind power installations (1),
- wherein the electrical energy generated within the respective wind power installation (1) is converted to an operating frequency (f) by means of a respective converter (3) and is transformed to a source voltage (U1) by means of a respective transformer (4) arranged downstream of the respective converter (3),
- wherein, proceeding from the wind power installations (1), the electrical energy is fed to an offshore conversion device (6) common to the wind power installations (1), in which conversion device the electrical energy is rectified,
- wherein, proceeding from the conversion device (6), the electrical energy is fed to an infeed device (7) arranged on land or close to land, from which infeed device the electrical energy is fed into the land-based energy supply network (8),
- wherein the operating frequency (f) is at least 100 Hz, **characterized in that**
the source voltage (U1) is at least 80 kV.

2. Method according to Claim 1,
**characterized in that**
the electrical energy is fed from the wind power installations (1) directly - without an interposed transformer device - to the conversion device (6) at the source voltage (U1).

## Revendications

1. Procédé de production et de transport d'énergie électrique d'un parc éolien au large des côtes à un réseau (8) d'alimentation en énergie sur la terre ferme,
- dans lequel on produit dans le parc éolien, au moyen d'une pluralité d'éoliennes (1), respectivement, de l'énergie électrique à partir de la force du vent,
- dans lequel on met l'énergie électrique produite dans chaque éolienne (1) au moyen de son propre convertisseur (3) à une fréquence (f) de travail et on la transforme à une tension (U1) de source au moyen d'un transformateur (4) respectif en aval du convertisseur (3) respectif,
- dans lequel on envoie l'énergie électrique, à partir des éoliennes (1), à un dispositif fixe de conversion, disposé au large des côtes, qui est commun aux éoliennes (1) et dans lequel on redresse l'énergie électrique,
- dans lequel on envoie l'énergie électrique, à partir du dispositif (6) de conversion, à un dispositif (7) d'alimentation, disposé sur la terre ferme ou en son voisinage, à partir duquel on envoie l'énergie électrique au réseau (6) d'alimentation en énergie sur la terre ferme,
- dans lequel la fréquence (f) de travail est d'au moins 100 Hz,
**caractérisé**
**en ce que** la tension (U1) de source est d'au moins 80 kV.

2. Procédé suivant la revendication 1,
**caractérisé**
**en ce que** l'on envoie l'énergie électrique du dispositif (6) de conversion des éoliennes (1) directement - sans dispositif de transformateur intermédiaire - à la tension (U1) de source.
